# EUROPEAN PATENT APPLICATION

(11) **EP 4 119 614 A1**
(43) Date of publication of application: **18.01.2023**
(21) Application number: 22183219.9
(22) Date of filing: 06.07.2022
(51) Int. Cl.: C08L 61/06, B29C 45/00

(54) **MOLDING MASS WITH RICE FLOUR**

(30) Priority: 15.07.2021 IT 202100018749
(71) Applicant: Intercom s.r.l., 21040 Castronno (VA) (IT); SANMIRO S.R.L., 23861 Cesana Brianza (LC) (IT)
(72) Inventor: VALSECCHI, Daniele, 23864 MALGRATE (LC) (IT); SPINELLI, Dino, 20124 MILANO (IT)
(74) Representative: Mittler, Andrea

(57) **Abstract**

A molding mixture is described for the production of handles for frying pans, comprising a composition which includes novolac phenolic resin base, hexamethylenetetramine, rice flour, lubricants and mineral charges. The rice flour is composed of a mixture of grains of different sizes, in particular according to the percentage by weight.

## Description

The present invention relates to a molding mass with rice flour.

The use of phenolic resins for producing molding masses for the production of frying pan handles has been known for many years.

Molding masses comprises a filler commonly formed by wood flour of various kinds (for example hazelnut). Other components can also be used as filler for molding masses such as glass fibers of various lengths, cellulose, carbonates, talc or minerals of various kinds. Each of these fillers can provide different characteristics for the molding mass and therefore for the final product. For example, glass fibers increase the impact resistance (tensile strength of the item at high temperature).

US-4196996 describes a composition comprising novolac phenolic resin, hexamethylenetetramine, stearates and magnesium, with the following proportions (parts by weight):

| | |
|---|---|
| phenol formaldehyde resin | from 15 to 45; |
| filler | from 47.5 to 75; |
| hexamethylenetetramine | from 7 to 9; |
| accelerants (magnesium oxides) | from 0.5 to 1; |
| lubricants (stearates) | from 0.6 to 0.9. |

The filler is made of wooden material.

It is also known to use rice flour as a filler, wherein rice flour means a mixture with a defined particle size composed of scraps from the rice plant, e.g. husk, straw or leaves.

US-4196996 describes the use of rice leaves as an additive in a filler, up to 40% by weight, although rice flour is declared to be the preferred filler.

EP-2435457 describes the use of rice straw in a mixture with similar components to those described above, in which a wooden filler (comprising rice straw) is present between 0.5% and 20% by weight.

MY-143102 describes a phenolic composition with a wooden filler which contains rice husk, in which the rice husk flour has a particle size comprised between 35 microns and 150 microns, in which each rice husk flour mixture has a single particle size.

In MY-143102 the quantity by weight of filler is comprised between 30% and 60%.

MY-143102 also mentions the use in the stearate composition of magnesium oxide and hexamethylenetetramine.

MY-143102 discusses the use of rice husk flour according to three different groups of particle sizes comprised between 35 microns and 150 microns, wherein the preferred particle size is the one with grains less than 38 microns.

Disadvantageously, the choice of a certain particle size for producing the rice flour to be included in the phenolic composition exalts some properties of the final product while penalizing others: the properties considered in MY-143102 are tensile strength, bending strength and impact resistance.

MY-143102 describes a higher bending strength for particle sizes less than 38 micron, whereas the tensile strength is more effective for high particle sizes. Differently, the resistance to impact is optimal for intermediate particle sizes, comprised between 38 microns and 75 microns.

The object of the present invention is to produce a molding mass including a composition comprising novolac phenolic resin base, hexamethylenetetramine and rice flour, in which the rice flour has a particle size that exalts the properties of the final product, for example a frying pan handle.

A further object of the present invention is that the particle size of the rice flour enables the replacement or integration of the wood flour in similar compositions.

Yet another object of the present invention is that the rice flour can be made of a raw material with a low cost and that can be easily reduced to the desired particle size.

According to the invention said and further objects are achieved with a molding mass for the production of frying pan handles, comprising a composition which includes, with the indicated percentage by weight ranges:

| | |
|---|---|
| - novolac phenolic resin base | 40-45%, |
| - hexamethylenetetramine | 6-8%, |
| - rice flour | 35-44%, |
| - lubricants | 1-2 %, |
| - mineral charges | 0.5-1%, |

characterized in that the rice flour is composed of a mixture of grains of different sizes, in particular with the following percentages by weight:
- 55% to 60% of grain sizes between 250 and 500 microns, including the size of 250 microns, excluding the size of 500 microns,
- 35% to 40% of grain sizes between 125 and 250 microns, including the size of 125 microns, excluding the size of 250 microns,
- 3% to 5% of grain sizes between 45 and 125 microns, including the size of 45 microns, excluding the size of 125 microns,
- at most 1% of grains with a size equal to or greater than 500 microns.

Advantageously, any molding mass with rice flour with three particle sizes according to the percentages indicated above enables at least three types of molding masses currently used to be replaced because it possesses such mechanical, thermal or electrical characteristics as to fulfil certain technical specifications.

The rice flour according to said composition reduces the percentage of mineral charge which normally varies from 5% to 25% by weight, which are also increasingly difficult to choose as each mineral charge has precise intrinsic technical requirements.

Advantageously, said rice flour also has a specific gravity which is five times lower than the specific gravity of any mineral charge commonly used, has a contained economic cost, is non-toxic and is not hazardous to the environment or to those using it.

Tests on molding masses according to the present invention have demonstrated advantageous workability in extruders.

These and other features of the present invention will become further apparent from the following detailed description of non-limiting practical embodiments of the invention.

A molding mass for the production of manufactured articles such as for example frying pan handles, includes a composition comprising (with the indicated percentages by weight):

| | |
|---|---|
| - novolac phenolic resin base | 40-45%, |
| - hexamethylenetetramine | 6-8%, |
| - rice flour | 35-44%, |
| - lubricants | 1-2%, |
| - mineral charges | 0.5-1%. |

The novolac phenolic resin base and hexamethylenetetramine constitute the fundamental (binding) polymer system which, once extruded and molded, make it possible to create various manufactured articles. Specifically, hexamethylenetetramine is a catalyst already used in novolac phenolic resins; the novolac/hexamethylenetetramine system has been the basis of Bakelite for hundreds of years.

Lubricants, for example stearates, release agents or synthetic waxes are components used to make the molding mass workable, i.e. moldable and then releasable from the molds. These components are commonly used in phenolic resin based compositions.

Mineral charges, for example magnesium oxides, are notoriously used to modulate the reactivity and thermal resistance of the molding mass and to give a certain compactness to the finished manufactured article.

Rice flour means a granulometric mixture comprising scraps of the rice plant, for example husk, straw or leaves.

The molding mass according to the present invention comprises rice flour composed of a mixture of grains of different sizes, in particular with the following percentages by weight:
- 55% to 60% of grain sizes between 250 and 500 microns, including the size of 250 microns, excluding the size of 500 microns,
- 35% to 40% of grain sizes between 125 and 250 microns, including the size of 125 microns, excluding the size of 250 microns,
- 3% to 5% of grain sizes between 45 and 125 microns, including the size of 45 microns, excluding the size of 125 microns,
- at most 1% of grains with a size equal to or greater than 500 microns.

The process for obtaining said mixture according to said percentages provides for the use of sieves. In particular:
- the 500 micron, 250 micron, 125 micron and 45 micron sieves are superimposed on a calibrated vibrating instrument for a certain number of vibrations per minute and for a period of 10 minutes.
- a certain quantity of product (100 or 1000 grams, for ease of calculation) is weighed out;
- the envisaged quantity is placed on the 500 micron sieve;
- the vibration and chronometer are started;
- after 10 minutes the residue remaining on each sieve is weighed out using a precision analytical balance;
- the weights found on each sieve are converted into a percentage.

The desired mixture is obtained:
A) by grinding the rice flour in a mill, always operating under the same conditions of temperature, air flow rate, rotation speed and quantity introduced;
B) by using a vibrating screen with a plurality of superimposed vibrating sieves which classify the product according to the required particle sizes, i.e. 500, 250, 125, 63 and 45 microns by separating the compliant product from the one outside the specifications which is automatically recycled.

The particle size classification is then verified and confirmed by laboratory tests performed for example using a Retsch AS 200 instrument which sieves 100 grams of rice flour for 5 minutes at amplitude 100 (number of vibrations of the sieve per minute) using 500, 250, 125, 63 and 45 micron sieves.

The use of rice flour according to said mixture of grains of different sizes enables molding masses to be produced also with wood flour which is mixed with the rice flour as a filler. The wood flour may be present but only in a low percentage by weight, preferably between 5% and 8%.

The molding mass according to the present invention is essentially based on the use of the rice flour which lowers the production cost of the molding mass composition (cost of the formula) and lightens the density of the final products maintaining price competitivity: a low density in the case of frying pan handles means that more handles are obtained with one kilogram of molding mass.

Further, the use of rice flour improves the resistance to heat which translates into greater resistance as the use temperature increases and greater durability of the final products over time.

The reduction in absorption of water on the final molded products is also to be noted, and therefore the possibility to use the molding mass according to the invention to create products to be used where water resistance or moisture conditions are a problem.

Tests carried out on the molding masses in the composition indicated above, according to the standards indicated in the following table, have highlighted the following properties:

| Property | Standard | Value |
|---|---|---|
| Density | ISO 1183 | 1.38-1.40 g/cm3 |
| Tensile strength | ISO 527 ½ | 45-50 MPa |
| Bending strength | ISO 178 | 80-95 MPa |
| Charpy impact resistance | ISO 179 | 6.5-7 kJ/m2 |
| Notched impact resistance | ISO 179 | 1.3-1.5 kJ/m2 |
| HDT T 8 heat resistance | ISO 75 | 125 - 140 °C |
| Dielectric resistance | IEC 60243 - PI | 30 kV/mm |
| Tracking index | IEC 60112 | 125 - 135 PTI |
| Water absorption (24h at 23°C) | ISO 62 | 40 mg |

Wherein:
g/cm3 = grams over cubic centimeters;
MPa = megapascal;
kJ/m2 = kilojoule over square meters;
HDT T 8 = deflection temperature under load T 8
kV/mm = kilovolt over millimeters;
PTI = proof tracking index.

Any molding mass with rice flour with three particle sizes according to the percentages indicated above enables at least three types of molding masses currently used to be replaced because it possesses such mechanical, thermal or electrical characteristics as to fulfil certain technical specifications.

The rice flour according to said composition also reduces the percentage of mineral charge which normally varies from 5% to 25% by weight, which are also increasingly difficult to choose as each mineral charge has precise intrinsic technical requirements.

For example, calcium carbonate is not very corrosive; talc has a higher thermal resistance; mica has high dielectric and insulating characteristics; short fiber glass is very abrasive, has a high specific gravity but provides excellent thermal and mechanical resistances.

The rice flour included in the molding mass according to the present invention incorporates many of the properties of the aforesaid mineral charges, a low percentage of magnesium oxide preferably being sufficient.

Advantageously, said rice flour also has a specific gravity which is five times lower than the specific gravity of any mineral charge commonly used, has a contained economic cost, is non-toxic and is not hazardous to the environment or to those using it.

Furthermore, advantageously:
- rice flour is more eco-sustainable than wood flour as it is not necessary to cut down any forests to obtain rice flour to be used (reclaimed wood does not have good performance levels);
- rice flour intrinsically has a high content of inorganic parts which provide greater heat resistance of the molding masses without using glass fibers or the like which are corrosive, hazardous to health and above all have a high cost;
- in terms of production process, rice flour absorbs a smaller quantity of phenol polymer with respect to wood flour.

The molding mass according to the present invention can be produced using an extruder or on heated cylinders.

An example of a production process provides for:
- pre-mixing of the raw materials in the ratios envisaged by the formula;
- hot homogenizing of the mixture through continuous or discontinuous mastication with the use of extruders or heater cylinders at temperatures comprised between 80°C and 130°C for a period of time connected with the size of the plant; during hot homogenization the resin melts, reacts, impregnates and binds the various components of the mixture;
- cooling, after which the molding mass is ground, sieved (to limit the presence of fine parts) and bagged.

The molding mass obtained is used in injection presses which lead to the production of various manufactured articles including frying pans, but also for example products for ovens for kitchens, electrical parts, ignition coils or parts of motor vehicles, wheels for trolleys.

## Claims

1. Molding mass for the production of handles and other manufactured articles, comprising a composition which includes, with the indicated percentage by weight ranges:
| | |
|---|---|
| - novolac phenolic resin base | 40-45%, |
| - hexamethylenetetramine | 6-8%, |
| - rice flour | 35-44%, |
| - lubricants | 1-2%, |
| - mineral charges | 0.5-1%, |
**characterized in that** the rice flour is composed of a mixture of grains of different sizes, in particular with the following percentages by weight:
- 55% to 60% of grain sizes between 250 and 500 microns, including the size of 250 microns, excluding the size of 500 microns,
- 35% to 40% of grain sizes between 125 and 250 microns, including the size of 125 microns, excluding the size of 250 microns,
- 3% to 5% of grain sizes between 45 and 125 microns, including the size of 45 microns, excluding the size of 125 microns,
- at most 1% of grains with a size equal to or greater than 500 microns.

2. Molding mass according to claim 1, **characterized in that** the lubricants are stearates and/or release agents.

3. Molding mass according to any one of the preceding claims, **characterized in that** the mineral charges are magnesium oxides.

4. Molding mass according to any one of the preceding claims, **characterized in that** it comprises wood flour.

5. Molding mass according to claim 4, **characterized in that** it comprises wood flour with a percentage by weight between 5% and 8%.
